# FASCICULE DE BREVET EUROPEEN

(11) **EP 2 616 805 B1**
(45) Date de publication et mention de la délivrance du brevet: **02.08.2017**
(21) Numéro de dépôt: 10778886.1
(22) Date de dépôt: 12.10.2010
(51) Int. Cl.: G01N 29/04, G01N 29/24

(54) **DISPOSITIF D'INSPECTION DE BANDE METALLIQUE EN DEFILEMENT**
VORRICHTUNG ZUR PRÜFUNG EINES BEWEGENDEN BLECHSTREIFENS
DEVICE FOR INSPECTING A MOVING METAL STRIP

(30) Priorité: 15.09.2010 EP 10290491
(43) Date de publication de la demande: 24.07.2013
(73) Titulaire: Primetals Technologies France SAS, 42600 Savigneux (FR)
(72) Inventeur: MICHAUT, Marc, F-42152 L'Horme (FR); DESCHAMPS, Olivier, F-69008 Lyon (FR)
(74) Mandataire: Metals@Linz
(86) Numéro de dépôt international: PCT/EP2010/065269
(87) Numéro de publication internationale: WO 2012/034602

(56) Documents cités:
- EP-B1- 0 885 389
- US-A- 4 689 996
- US-A- 5 154 081
- US-A- 5 714 689
- US-A- 5 866 820

## Description

La présente invention concerne un dispositif d'inspection de bande métallique en défilement selon la revendication 1.

L'invention se rapporte à une inspection sans contact de produits métallurgiques en défilement, particulièrement à la détection de défauts internes dans des bandes d'acier, par utilisation d'ondes ultrasonores.

L'utilisation des ondes ultrasonores pour l'inspection de défauts internes de structures d'un acier est connue de l'homme de métier. De nombreuses variantes portant sur le type d'ondes, leur fréquence, leur incidence permettent d'apporter des solutions adaptées à de très nombreux cas de détection de défauts présentant des localisations, des orientations, des dimensions particulières.

Dans la majorité des cas, l'inspection concerne des structures fixes et est réalisée par déplacement manuel ou mécanisé de transducteurs, c'est-à-dire d'au moins un émetteur et d'au moins un récepteur d'ondes ultrasonores sur au moins une surface de ladite structure.

Les transducteurs sont capables de générer et de détecter les ondes ultrasonores en mettant le plus souvent en oeuvre les principes de la piézoélectricité.

En règle générale, le transfert des ondes ultrasonores entre le transducteur et la structure est assuré à travers un milieu intermédiaire de couplage homogène, le plus souvent aqueux, exempt de particules et de bulles d'air, d'épaisseur constante et de viscosité adaptée.

L'inspection d'objets mouvants comme une bande ou une plaque métallique en défilement pose des problèmes spécifiques essentiellement liés à la vitesse dudit défilement.

L'un de ces problèmes est le maintien d'un couplage efficace entre le transducteur et la surface de l'objet mouvant. Il est plus ou moins résolu par le transfert des ondes entre transducteur et surface au sein d'une colonne ou d'un matelas de couplant aqueux comme de l'eau ou de l'huile ou de la graisse ou un gel, lesquels colonne ou matelas sont renouvelés de manière constante par un moyen de circulation ou d'apport de couplant. Le maintien du milieu de couplage est un obstacle contraignant important mal adapté à l'utilisation de grandes vitesses de déplacement relatif transducteur et une surface à inspecter.

Un autre problème concerne le mode d'exploration de l'objet ou au moins de sa surface. En effet, une exploration à 100% de la surface d'une bande ou d'une plaque métallique est très difficilement réalisable avec des ondes ultrasonores se propageant selon une direction substantiellement perpendiculaire à ladite surface. Pour cela, il faut que le transducteur se déplace selon la largeur de la bande (transversalement à la direction de défilement de bande) et que la vitesse de défilement de la bande soit assez lente pour permettre une exploration à 100% selon un trajet en zigzag résultant des mouvements combinés de la bande et du transducteur, sachant de plus que la vitesse de déplacement dudit transducteur est limitée par la nécessité de maintenir un milieu de couplage. L'exercice est donc fort complexe et pas adapté pour de grandes vitesses de défilement de bande.

Le brevet EP 0885 389 B1 décrit un dispositif utilisé pour la détection de défauts d'une bande métallique en défilement par utilisation d'ondes ultrasonores de Lamb. Dans ce dispositif, un transducteur piézoélectrique apte à générer des ondes de Lamb est logé dans une roue précédée d'un système de distribution de fluide de couplage. L'utilisation des ondes de Lamb permet en effet de résoudre le problème d'exploration de la bande, car ce type d'ondes spécifique est apte à se propager parallèlement à la surface de la bande. Un faisceau d'ondes ultrasonores peut donc se propager sur toute la largeur de la bande à partir d'un transducteur fixe positionné sur l'un des bords latéraux de la bande en défilement. Ce type d'ondes permet donc des vitesses de défilement de bande beaucoup plus grandes puisque l'exploration est réalisée sur toute la largeur de la bande et que le transducteur reste fixe, l'exploration ne se faisant plus selon un trajet en zigzag.

Toutefois, le système d'exploration par contact du transducteur avec la bande ne résout pas de manière satisfaisante le maintien du milieu de couplage à grande vitesse de déplacement relatif transducteur / surface à inspecter.

Enfin, un autre problème important est celui de la reconnaissance et de l'évaluation des défauts détectés. S'agissant d'une inspection d'une bande métallique en défilement au cours de son processus de transformation, par exemple une transformation par laminage, il est impossible de stopper ladite bande pendant un temps d'analyse des défauts détectés sans perturber considérablement le processus de transformation.

US 5 866 820 présente un dispositif d'inspection de bande métallique en défilement comprenant :
- un premier transducteur, également dénommé par la suite EMAT (= electromagnetic acoustic transducer) incluant un émetteur d'ondes ultrasons, les dites ondes étant émise en incidence depuis l'émetteur vers une première zone faciale de la bande au voisinage du milieu transversal de bande, l'émetteur étant sans contact avec la bande,
- un deuxième EMAT incluant un récepteur d'ondes ultrasons, les dites ondes étant reçues par émergence depuis une seconde zone de la face de bande vers le récepteur, le récepteur étant sans contact avec la bande, ladite seconde zone étant juxtaposée à la première zone selon la direction de défilement de bande et permettant une mesure de type échographique entre les deux EMAT,
- une unité de traitement couplée au deuxième EMAT afin de délivrer au moins un critère d'inspection au moyen d'une signature échographique des ondes ultrasons mesurées au deuxième EMAT.

Ce dispositif permet donc une mesure échographique (par réflexion d'ondes sur un défaut) sur une demi-largeur de bande. En dédoublant le dispositif transversalement à la direction de défilement, il est ainsi possible de réaliser une inspection de la largeur complète de la bande. Ce dernier mode de réalisation requiert ainsi deux paires de deux transducteurs ou EMAT, chacune des paires étant prévue pour une inspection d'une des demi-largeurs de bande. En outre, le brevet US5154081 décrit un un dispositif d'inspection ultrasonique de bande métallique en défilement comprenant un premier EMAT incluant un émetteur d'ondes ultrasons, un deuxième EMAT incluant un récepteur d'ondes ultrasons et un troisième EMAT incluant un récepteur d'ondes ultrasons, le premier et le deuxième EMATs étant disposés de telle façon qu'un chemin d'ondes entre eux et linéaire et principalement transversal au défilement de la bande.

Un but de la présente invention est de trouver une solution aux problèmes précités, en particulier ceux posés par une inspection de bande en défilement au moyen d'ondes ultrasonores, pour laquelle le défilement de la bande peut atteindre des vitesses importantes, telles que supérieures au m/s. Dans cette lignée, l'invention vise à s'affranchir de toute obligation de contact contraignant entre un transducteur et la bande.

L'invention doit aussi apporter une solution d'inspection simple (par exemple en limitant le nombre de transducteurs pour une inspection de largeur complète de bande) et efficace de produits métallurgiques en défilement, particulièrement de détection de défauts internes ou superficiels dans des bandes d'acier, adaptable à une utilisation flexible et étendue d'ondes ultrasonores telles que les ondes de Lamb, de Rayleigh ou SH (Shear Horizontal waves) générées et détectées sans contrainte de contact avec le produit métallurgique. Un dispositif d'inspection de bande métallique en défilement selon la présente invention comprend:
- un premier transducteur (2), également aussi dénommé par la suite EMAT (= electromagnetic acoustic transducer) incluant un émetteur d'ondes ultrasons, les dites ondes étant émise en incidence depuis l'émetteur vers un premier bord d'une face de la bande, l'émetteur étant sans contact avec la bande,
- un deuxième EMAT (3a) incluant un récepteur d'ondes ultrasons, les dites ondes étant reçues par émergence depuis une zone de la face de bande vers le récepteur, le récepteur étant sans contact avec la bande,
- une unité de traitement couplée au deuxième EMAT afin de délivrer au moins un critère d'inspection aux moyens d'au moins une signature des ondes ultrasons mesurées au deuxième EMAT,
- la zone étant disposée sur la bande de telle façon qu'un chemin d'ondes entre le premier bord de la bande et la dite zone est principalement monodirectionnel, c'est-à-dire aligné sur au moins une direction linéaire et principalement transversale au défilement de la bande,
ledit dispositif étant caractérisé par un troisième transducteur acoustique électromagnétique EMAT (3b) incluant un récepteur d'ondes ultrasons transmises par le premier EMAT (2) en émergence depuis la face du premier bord de la bande vers le récepteur, le récepteur étant sans contact avec la bande, l'unité de traitement étant couplée au troisième EMAT afin de délivrer au moins un second critère d'inspection aux moyens d'au moins de deux signatures des ondes ultrasons dont au moins la signature issue d'une mesure par le deuxième EMAT et une signature issue d'une mesure par le troisième EMAT.

De cette manière, une inspection d'une largeur souhaitée jusqu'à une largeur complète de la bande est flexiblement possible, ainsi que reste dans tous les cas de figures simple car est réalisée à l'aide uniquement de deux transducteurs, tous deux sans aucun contact avec la bande. L'inspection est aussi avantageusement instantanée (sans zigzag) sachant que la vitesse des ondes sonores entre les deux transducteurs est bien supérieure à celle du défilement de la bande.

Un ensemble de sous-revendications présente également des avantages de l'invention.

En particulier, selon un mode de réalisation préférentiel du dispositif selon l'invention, au plus éloigné du premier bord de bande, la zone est disposée à un bord de bande principalement transversalement opposé au premier bord de la bande. De cette manière, une inspection de la largeur complète de la bande est possible, à l'aide uniquement de deux transducteurs ou EMATs. Inversement à US 5 866 820, deux demi-largeurs alignées sur une seule transversale de bande sont donc mesurables et il est ainsi plus facile d'inspecter et aussi de répertorier une seule ligne (= une largeur transversale de la bande) de données que deux portions de lignes décalées de données d'inspection telles qu'imposées par US 5 866 820.

Ainsi, avantageusement le premier et le deuxième EMAT peuvent présenter un écartement librement ajustable, égal ou supérieur à une demi-largeur de bande. La présente invention prévoit donc un troisième EMAT incluant un récepteur d'ondes ultrasons transmises en émergence depuis une face du premier bord de la bande vers le récepteur, le récepteur étant sans contact avec la bande, l'unité de traitement est ainsi aussi couplée au troisième EMAT afin de délivrer au moins un second critère d'inspection aux moyens d'au moins de deux signatures des ondes ultrasons dont au moins la signature issue d'une mesure par le deuxième EMAT et une signature issue d'une mesure par le troisième EMAT.
De cette façon, il est ainsi possible d'obtenir une signature par échographie d'ondes (entre le 1^{er} et le 3^{e} EMAT) complémentaire à la signature par transmission d'ondes (entre le 1^{er} et le 2nd EMAT). La détection par inspection d'un défaut de bande est ainsi accrue et le défaut peut être reconnu par deux critères complémentaires qui tendent à éliminer toute équivoque potentielle quant à sa détermination. En effet, une seule signature par exemple au moyen d'une mesure échographique peut provenir d'un artefact du dispositif de défilement de bande ou du dispositif même d'inspection, ainsi sans relation avec un défaut intrinsèque de bande. En apportant une redondance de signatures, de tels artefacts sont ainsi plus aisément écartés et rendent le dispositif d'inspection plus robuste contre toute erreur d'inspection.

Idéalement, les trois EMAT sont disposés aux sommets d'un triangle dont un des côtés (entre le 1^{er} et le 2nd EMAT) est parallèle à une transversale à la direction de défilement de la bande. Le 3^{e} EMAT est placé sur le même bord de bande que le 1^{er} EMAT et quelque peu décalé du 1^{er} EMAT selon la direction de défilement de bande. L'écartement entre le 1^{er} et le 3^{e} EMAT est défini de façon à obtenir une triangulation idéale pour des mesures échographiques voulues.

A des fins d'adaptation à un certain format de bande comme à des fins de détection plus locale de défaut ou de minimisation de zones dites d'ombre ultrasonore de l'inspection selon l'invention, au moins un des trois EMAT peut être prévu mobile selon une direction principalement transversale au défilement de la bande, idéalement en mode d'asservissement à un format ou/et une largeur de bande permettant d'éviter des interventions dangereuses au voisinage de la bande en défilement.

Le dispositif selon l'invention prévoit aussi qu'une distance sans contact entre chaque EMAT et la face de la bande est maintenue soit constante ou sinon est délivrée par une moyen de mesure instantanée, voire les deux en cas par exemple de fluctuations mineures d'une épaisseur de bande ou de changement d'une bande à une autre.
Enfin, le dispositif selon l'invention peut aussi prévoir qu'au moins un chemin d'ondes entre le premier bord de la bande et la zone est disposé sur une portion de défilement de bande présentant au moins une valeur supérieure à un seuil minimal en traction de bande. Ce critère de qualité assure que des fluctuations de la distance sans contact entre la bande et les EMAT restent sous une tolérance acceptable afin de ne pas confondre un défaut avec une telle fluctuation lors d'une inspection.

Le dispositif selon l'invention prévoit que l'unité de traitement comprend :
- un module de contrôle de rapports signal-bruit de signal et/ou de signaux de mesure des ondes ultrasons recueilli(s) au deuxième et/ou au troisième EMAT,
- un module de détection d'anomalies de propagation d'ondes ultrasonores
- un moyen d'identification typologique de zones de bande présentant des anomalies de propagation par rapport à des défauts de référence stockées dans une base de données,
- un moyen d'identification géographique de zones de bande présentant des anomalies de propagation par rapport à une origine longitudinale et une origine transversale de la bande en défilement, - un moyen d'identification de la gravité des défauts identifiés suivant au moins un seuil de criticité prenant en compte au moins l'un des critères d'identification géographique et typologique.

Le dispositif selon l'invention peut comprendre un module de commande de paramètres de génération d'ondes émises par le premier EMAT apte à être mis sous un mode auto-calibratoire en exécutant une série d'envois d'ondes destinés à être mis sous analyse par l'unité de traitement après réception de la dite série par le deuxième et/ou le troisième EMAT. Ce mode auto-calibratoire peut toutefois être remplacé ou être un mode de calibration affinée d'une banque de données de calibration déjà prédéfinies par un paramètrage en temps réel d'une bande connue en défilement.

Enfin, un autre mode de réalisation du dispositif selon l'invention comprend :
- au moins un quatrième EMAT incluant un émetteur d'ondes similaire à celui du premier EMAT étant disposé au voisinage de la zone en rapport avec le deuxième EMAT,
- le premier et le quatrième EMAT (de type émetteur) sont activables séquentiellement ou bien même simultanément sous des modes libres d'interférences, les dits modes étant mesurables séquentiellement ou bien même simultanément par le second et le troisième EMAT (de type récepteur)..

Par ce biais, des défauts de bande peuvent être inspectés depuis chaque bord de bande, donc l'inspection s'avère plus exacte. En effet, si depuis un des bords de bande, c'est-à-dire sur la base d'un des EMAT de type émetteur, une ou les signatures des deux EMAT de type récepteur associés ne satisfont pas à un critère d'inspection requis, deux autres signatures seront disponibles depuis l'autre bord de bande, c'est-à-dire sur la base de l'autre EMAT de type émetteur et des mêmes EMAT de type récepteur. Ces quatre signatures (deux par transmission d'ondes et deux par échographie) peuvent être obtenues simultanément (et pour une même ligne ou largeur de la bande en défilement), car avantageusement, les deux EMAT de type récepteur peuvent émettre des trains d'ultrasons par exemple à des fréquences différentes qui sont aussi chacune simultanément démodulée sans interférence par les deux EMAT de type récepteur. A cet effet et préférentiellement, les quatre EMAT peuvent être disposés aux sommets d'un rectangle ayant un côté parallèle à une transversale à la direction de défilement de la bande.
Enfin, l'invention propose aussi une utilisation du dispositif selon l'invention pour détecter des défauts de bandes métalliques à froid ou à chaud en défilement par rapport audit dispositif, les dits défauts étant soit surfaciques soit internes et interagissant avec des catégories d'ondes ultrasons transmises ou réfléchies en tant qu'atténuateurs, diffuseurs ou transformateurs d'ultrasons, les défauts étant identifiables par au moins deux signatures issues d'au moins le deuxième et le troisième transducteurs acoustiques électromagnétiques EMAT (3a, 3b) incluant un récepteur d'ondes à ultrasons transmises par le premier transducteur acoustique électromagnétique EMAT (2) incluant un émetteur d'ondes ultrasons. Une telle utilisation dudit dispositif est majeure pour permettre de rapidement et efficacement contrôler la qualité de bandes métalliques produites à de haute vitesse de défilement. Si de telles bandes sont ensuite enroulées sur des rouleaux en vue d'autres opérations de traitement métalliques, il est ainsi possible de repérer quels seraient les endroits de bande à défaut pouvant présenter un problème ou un traitement spécial pour assurer le bon déroulement des dites opérations. Ceci est faisable, car les signatures de défauts sont enregistrables en relation avec la bande en question et sa typologie et topologie. Au pire, ces dernières informations permettent aussi de localiser une portion précise de bande comprenant au moins un défaut jugé impropre par l'inspection et destiné à être coupée et supprimée ou retraitée/recyclée.

Des exemples de réalisation et d'application sont fournis à l'aide de figures décrites :
- Figure 1: Vue schématique de face du dispositif selon l'invention,
- Figure 2: Vue de haut de la disposition d'EMAT selon des modes de réalisation du dispositif selon l'invention.

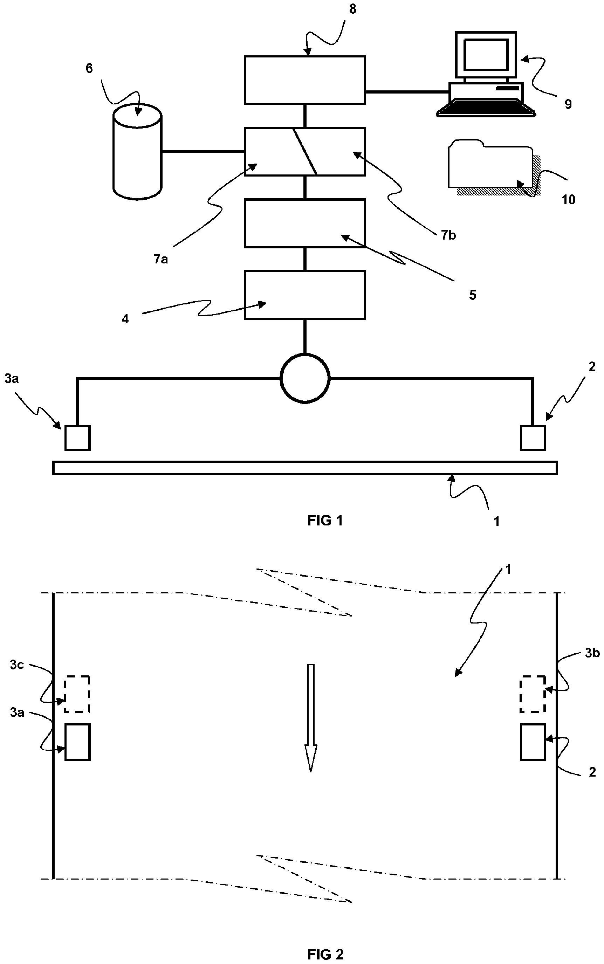

La figure 1 présente une vue schématique de face du dispositif selon l'invention. Un produit métallurgique (1) défile dans une installation de transformation d'un produit métallurgique. Dans notre exemple, le produit est une bande métallique défilant horizontalement dans un plan perpendiculaire à la figure 1.

Un émetteur ou générateur d'ondes ultrasonores (2), par exemple de type EMAT, positionné ici statiquement au dessus d'un des bords latéraux du produit métallurgique en défilement, génère des ondes ultrasonores de Lamb ou de Rayleigh ou SH (Shear horizontal waves) dans ledit produit métallurgique, sans contact avec la surface de celui-ci.

Un récepteur d'ondes ultrasonores (3a), également de type EMAT, est positionné statiquement au dessus de l'autre bord latéral dudit produit, de sorte que le premier et le deuxième EMAT ainsi définis se font vis-à-vis sur une ligne transversale de bande (= largeur de bande). Le récepteur (3a) reçoit donc des ondes ultrasonores provenant du générateur (2) et ayant parcouru une largeur de bande par transmission surfacique et/ou volumique du métal.

Un module (4) assure le prétraitement du signal reçu du récepteur d'ondes ultrasonores. Ce traitement vise à améliorer le rapport signal / bruit en vue d'une exploitation plus efficace du signal. Il peut être, à titre d'exemple, de type SAFT (Synthetic Aperture Focusing Technique).

Un module (5) assure la détection des anomalies de propagation des ondes ultrasonores quel que soit leur type, comme une atténuation durant leur parcours d'un bord à l'autre du produit, ou un retour d'un écho réfléchi (voir exemple selon figure 2), ou une transformation du mode de propagation de l'onde.

Une base de données (6) comporte une bibliothèque d'anomalies de propagation des ondes ultrasonores auxquelles sont associés des défauts du produit connus et mesurés par leurs signatures similaires.

Un module (7a) assure l'identification typologique des zones présentant des anomalies de propagation en liaison avec la base de donnée (6), en mettant en oeuvre, par exemple, des techniques d'apprentissage connues telles que les k plus proches voisins, les réseaux neuronaux...

Un module (7b) assure l'identification géographique des zones présentant des anomalies de propagation par rapport à une origine longitudinale et une origine transversale du produit métallurgique en défilement.

Un module d'analyse de criticité (8) assure l'appréciation de la gravité des défauts identifiés suivant au moins un seuil de criticité prenant en compte au moins l'un des critères d'identification géographique et typologique.

Ces seuils de criticité sont modulables en fonction du niveau de qualité jugée acceptable pour un produit donné, pour une application donnée, un marché donné... Aussi une signature mesurée peut contenir une information quantitative sur l'intensité d'un défaut.

Des moyens (9) de visualisation des résultats de l'inspection, par exemple un moniteur associé à un stockage de données mis à la disposition d'un opérateur, ainsi que des moyens d'édition (10) tels qu'une imprimante ou une table traçante, permettent l'exploitation directe ou différée des résultats de l'inspection.

Figure 2 présente une vue de dessus de la portion de bande en défilement, sur laquelle plusieurs modes de réalisation possible et avantageux du dispositif selon l'invention sont indiqués (de façon regroupée).

En premier lieu, le premier et le deuxième EMAT incluant respectivement un émetteur et un récepteur (2, 3a) sont représentés tels qu'à la figure 1 et forme un premier mode de réalisation du dispositif selon l'invention. Selon l'invention et en complément au récepteur (3a), un troisième EMAT comprenant un second récepteur (3b) est positionné statiquement au dessus du même bord latéral du produit métallurgique que le générateur (2). Cette disposition d'EMAT forme ainsi un second mode de réalisation du dispositif selon l'invention qui permet d'obtenir deux signatures distinctes par transmission d'ondes et par échographie.

Enfin, en complément de ce second mode de réalisation, un quatrième EMAT comprenant un troisième émetteur (3c) est positionné statiquement au dessus du même bord latéral du produit métallurgique que le premier récepteur (3a), mais en décalage par rapport à celui-ci, au moins selon la direction de défilement de bande. Cette disposition d'EMAT forme ainsi un troisième mode de réalisation du dispositif selon l'invention qui permet d'obtenir deux à quatre signatures distinctes par transmission d'ondes entre EMAT de bords opposés de bande et additionnellement par échographie entre EMAT de mêmes bords de bande. L'inspection de défaut est donc rendue plus fine ou plus robuste contre des zones d'ombre d'inspection ou des artefacts externes au dispositif d'inspection lui-même.

En fonction des formats de bande ou selon le type de défauts à inspecter, les dispositions statiques des EMAT précitées peuvent être également redimensionnées dans le voisinage des bords de bande selon des critères géométriques (triangle à angle variable/trapèze/rectangle), assurant ainsi une inspection dynamiquement plus performante en ce que les signaux ultrasonores atteignent de plus hauts rapports signal/bruit menant à des signatures plus fines de défauts, donc moins sensibles à des artefacts des appareillages environnants ou de la bande.

Les générateur et récepteurs d'ondes ultrasonores peuvent ainsi ou aussi être portés par des chariots mobiles au moins dans le sens de la largeur du produit, permettant ainsi de positionner ceux-ci sur le ou les bords dudit produit quelque soit sa largeur.

De manière avantageuse, le déplacement de ces chariots mobiles est motorisé, la motorisation étant asservie à la largeur du produit métallurgique et à son centrage dans une installation de traitement au moyen de données qui sont normalement connues et disponibles dans le système d'automatismes de commande de la dite installation et dudit dispositif.

Le dispositif selon l'invention et les aspects précédemment décrits présentent donc un ensemble d'avantages décisifs par rapport à l'art antérieur :
- Absence de contact entre la surface du produit métallurgique et les générateurs et récepteurs d'ondes ultrasonores supprimant l'usure des parties frottantes entre dispositif et produit ainsi que la nécessité de changer régulièrement ces parties frottantes,
- Pas de nécessité de distribuer de produit de couplage entre les surfaces de dispositif et produit et donc plus de nécessité non plus de nettoyer la surface des produits après inspection,
- Vitesse opératoire non liée à la nécessité d'entretenir un couplage par contact,
- Exploration simultanée de l'ensemble de la largeur du produit métallurgique,
- Possibilité d'adapter le mode de propagation des ondes ultrasonores à l'épaisseur du produit et aux types de défauts recherchés,
- Identification et quantification automatique des défauts ne faisant pas appel à l'intervention d'un opérateur, en particulier, pas de nécessité d'interrompre le défilement du produit pour procéder à l'identification.
- Possibilité de fournir en temps réel à un opérateur des informations concernant la qualité du produit métallurgique, lui permettant ainsi d'éliminer si nécessaire des zones défectueuses de produit,
- Possibilité d'éditer un état de la qualité du produit métallurgique, par exemple une cartographie des défauts.

## Revendications

1. Dispositif d'inspection de bande métallique en défilement comprenant :
- un premier transducteur acoustique électromagnétique EMAT (2) incluant un émetteur d'ondes ultrasons, les dites ondes étant émise en incidence depuis l'émetteur vers un premier bord d'une face de la bande, l'émetteur étant sans contact avec la bande,
- un deuxième transducteur acoustique électromagnétique EMAT (3a) incluant un récepteur d'ondes ultrasons, les dites ondes étant reçues par émergence depuis une zone de la face de bande vers le récepteur, le récepteur étant sans contact avec la bande,
- une unité de traitement couplée au deuxième EMAT afin de délivrer au moins un critère d'inspection aux moyens d'au moins une signature des ondes ultrasons mesurées au deuxième EMAT,
- la zone étant disposée sur la bande de telle façon qu'un chemin d'ondes entre le premier bord de la bande et la dite zone est aligné sur une direction linéaire et principalement transversale au défilement de la bande,
**caractérisé par** un troisième transducteur acoustique électromagnétique EMAT (3b) incluant un récepteur d'ondes ultrasons transmises par le premier EMAT (2) en émergence depuis la face du premier bord de la bande vers le récepteur, le récepteur étant sans contact avec la bande, l'unité de traitement étant couplée au troisième EMAT afin de délivrer au moins un second critère d'inspection aux moyens d'au moins deux signatures des ondes ultrasons dont au moins la signature issue d'une mesure par le deuxième EMAT et une signature issue d'une mesure par le troisième EMAT.

2. Dispositif d'inspection selon revendication 1, pour lequel, au plus éloigné du premier bord de bande, la zone est disposée à un bord de bande principalement transversalement opposé au premier bord de la bande.

3. Dispositif selon revendication 1 ou 2, pour lequel le premier et le deuxième EMAT (2, 3a) présentent un écartement égal ou supérieur à une demi-largeur de bande.

4. Dispositif selon une des revendications précédentes, pour lequel les trois EMAT sont disposés aux sommets d'un triangle dont un des côtés est parallèle à une transversale à la direction de défilement de la bande.

5. Dispositif selon une des revendications précédentes, pour lequel au moins un des trois EMAT est mobile selon une direction principalement transversale au défilement de la bande.

6. Dispositif selon revendication 5, pour lequel au moins un des trois EMAT est mobile selon une direction principalement transversale au défilement de la bande, en mode d'asservissement à un format ou/et une largeur de bande.

7. Dispositif selon une des revendications précédentes, pour lequel une distance sans contact entre chaque EMAT et la face de la bande est maintenue soit constante ou sinon est délivrée par un moyen de mesure instantanée.

8. Dispositif selon une des revendications précédentes 4-7, pour lequel l'unité de traitement comprend :
- un module (4) de contrôle des rapports signal-bruit de signal de mesure recueilli aux deuxième et troisième EMAT,
- un module (5) de détection d'anomalies de propagation d'ondes ultrasonores
- un moyen (7a) d'identification typologique de zones présentant des anomalies de propagation par rapport à des défauts de référence stockées dans une base de données (6),
- un moyen (7b) d'identification géographique des zones présentant des anomalies de propagation par rapport à une origine longitudinale et une origine transversale de la bande en défilement,
- un moyen (8) d'identification de la gravité des défauts identifiés suivant au moins un seuil de criticité prenant en compte au moins l'un des critères d'identification géographique et typologique.

9. Dispositif selon une des revendications précédentes 4-7, pour lequel :
- au moins un quatrième transducteur acoustique électromagnétique EMAT incluant un émetteur d'ondes similaire à celui du premier EMAT est disposé au voisinage de la zone en rapport avec le deuxième EMAT (3a),
- le premier et le quatrième EMAT sont activables simultanément sous des modes libres d'interférences, les dits modes étant mesurables simultanément par le second et le troisième EMAT.

10. Dispositif selon revendication 9, pour lequel les quatre EMAT sont disposés aux sommets d'un rectangle ayant un côté parallèle à une transversale à la direction de défilement de la bande.

11. Utilisation du dispositif selon une des revendications précédentes pour détecter des défauts de bandes métalliques à froid ou à chaud en défilement par rapport audit dispositif, les dits défauts étant soit surfaciques soit internes et interagissant avec des catégories d'ondes ultrasons transmises ou réfléchies en tant qu'atténuateurs, diffuseurs ou transformateurs d'ultrasons, les défauts étant identifiables par au moins deux signatures issues d'au moins le deuxième et le troisième transducteurs acoustiques électromagnétiques EMAT (3a, 3b) incluant un récepteur d'ondes à ultrasons transmises par le premier transducteur acoustique électromagnétique EMAT (2) incluant un émetteur d'ondes ultrasons.

## Patentansprüche

1. Vorrichtung zur Prüfung eines vorbeilaufenden Metallbandes, welche umfasst:
- einen ersten elektromagnetisch-akustischen Messwandler EMAT (2), der einen Ultraschallwellensender aufweist, wobei die Wellen so emittiert werden, dass sie von dem Sender aus in Richtung eines ersten Randes einer Seite des Bandes einfallen, wobei der Sender nicht mit dem Band in Kontakt kommt,
- einen zweiten elektromagnetisch-akustischen Messwandler EMAT (3a), der einen Ultraschallwellenempfänger aufweist, wobei die Wellen dadurch empfangen werden, dass sie aus einem Bereich der Seite des Bandes in Richtung des Empfängers austreten, wobei der Empfänger nicht mit dem Band in Kontakt kommt,
- eine Verarbeitungseinheit, die mit dem zweiten EMAT gekoppelt ist, um wenigstens ein Prüfkriterium mittels wenigstens einer Signatur der Ultraschallwellen zu liefern, die an dem zweiten EMAT gemessen werden,
- wobei der Bereich auf dem Band derart angeordnet ist, dass ein Wellenweg zwischen dem ersten Rand des Bandes und dem Bereich in einer geradlinigen und im Wesentlichen quer zur Laufrichtung des Bandes verlaufenden Richtung ausgerichtet ist,
**gekennzeichnet durch** einen dritten elektromagnetisch-akustischen Messwandler EMAT (3b), der einen Empfänger von durch den ersten EMAT (2) übertragenen Ultraschallwellen aufweist, die aus der Seite des ersten Randes des Bandes in Richtung des Empfängers austreten, wobei der Empfänger nicht mit dem Band in Kontakt kommt, wobei die Verarbeitungseinheit mit dem dritten EMAT gekoppelt ist, um wenigstens ein zweites Prüfkriterium mittels wenigstens zweier Signaturen der Ultraschallwellen zu liefern, darunter wenigstens der Signatur, die von einer Messung durch den zweiten EMAT stammt, und einer Signatur, die von einer Messung durch den dritten EMAT stammt.

2. Vorrichtung zur Prüfung nach Anspruch 1, wobei, wenn er am weitesten vom ersten Bandrand entfernt ist, der Bereich an einem Bandrand angeordnet ist, der dem ersten Rand des Bandes im Wesentlichen quer gegenüberliegt.

3. Vorrichtung nach Anspruch 1 oder 2, wobei der erste und der zweite EMAT (2, 3a) einen Abstand aufweisen, der gleich einer oder größer als eine halbe Breite des Bandes ist.

4. Vorrichtung nach einem der vorhergehenden Ansprüche, wobei die drei EMATs an den Ecken eines Dreiecks angeordnet sind, dessen eine Seite parallel zu einer quer zur Laufrichtung des Bandes verlaufenden Geraden ist.

5. Vorrichtung nach einem der vorhergehenden Ansprüche, wobei wenigstens einer der drei EMATs entlang einer Richtung beweglich ist, die im Wesentlichen quer zur Laufrichtung des Bandes verläuft.

6. Vorrichtung nach Anspruch 5, wobei in einer Betriebsart der Nachführung bezüglich eines Formats und/oder einer Breite des Bandes wenigstens einer der drei EMATs entlang einer Richtung beweglich ist, die im Wesentlichen quer zur Laufrichtung des Bandes verläuft.

7. Vorrichtung nach einem der vorhergehenden Ansprüche, wobei ein Abstand ohne Kontakt zwischen jedem EMAT und der Seite des Bandes entweder konstant gehalten wird oder andernfalls durch ein Mittel zur augenblicklichen Messung geliefert wird.

8. Vorrichtung nach einem der vorhergehenden Ansprüche 4-7, wobei die Verarbeitungseinheit umfasst:
- ein Modul (4) zur Steuerung der Signal-Rausch-Verhältnisse der Messsignale, die am zweiten und dritten EMAT erfasst werden,
- ein Modul (5) zur Erkennung von Anomalien der Ausbreitung von Ultraschallwellen,
- ein Mittel (7a) zur typologischen Identifizierung von Bereichen, die Anomalien der Ausbreitung aufweisen, in Bezug auf Referenzdefekte, die in einer Datenbank (6) gespeichert sind,
- ein Mittel (7b) zur geographischen Identifizierung von Bereichen, die Anomalien der Ausbreitung aufweisen, in Bezug auf einen Ausgangspunkt in Längsrichtung und einen Ausgangspunkt in Querrichtung des vorbeilaufenden Bandes,
- ein Mittel (8) zur Identifizierung der Schwere der identifizierten Fehler gemäß wenigstens einem Schwellenwert der Kritizität unter Berücksichtigung wenigstens eines der Kriterien der geographischen und der typologischen Identifizierung.

9. Vorrichtung nach einem der vorhergehenden Ansprüche 4-7, wobei:
- wenigstens ein vierter elektromagnetisch-akustischer Messwandler EMAT, welcher einen Wellensender aufweist, der demjenigen des ersten EMAT ähnlich ist, in der Nähe des Bereiches angeordnet ist, der mit dem zweiten EMAT (3a) in Beziehung steht,
- der erste und der vierte EMAT gleichzeitig unter Betriebsarten aktivierbar sind, die frei von Störungen sind, wobei diese Betriebsarten gleichzeitig durch den zweiten und den dritten EMAT messbar sind.

10. Vorrichtung nach Anspruch 9, wobei die vier EMATs an den Ecken eines Rechtecks angeordnet sind, dessen eine Seite parallel zu einer quer zur Laufrichtung des Bandes verlaufenden Geraden ist.

11. Verwendung der Vorrichtung nach einem der vorhergehenden Ansprüche zum Erkennen der Fehler von kalt- oder warmgewalzten Metallbändern, die an der Vorrichtung vorbeilaufen, wobei die Fehler entweder Oberflächenfehler oder innere Fehler sind und mit Kategorien von transmittierten oder reflektierten Ultraschallwellen als Abschwächer, Diffusoren oder Wandler von Ultraschall interagieren, wobei die Fehler durch wenigstens zwei Signaturen identifizierbar sind, die von wenigstens dem zweiten und dem dritten elektromagnetisch-akustischen Messwandler EMAT (3a, 3b) stammen, die einen Empfänger von Ultraschallwellen aufweisen, die durch den ersten elektromagnetisch-akustischen Messwandler EMAT (2) übertragen werden, der einen Ultraschallwellensender aufweist.

## Claims

1. Device for inspecting a moving metal strip, including:
- a first electromagnetic acoustic transducer EMAT (2) including an ultrasonic wave emitter, said waves being emitted from the emitter so as to be incident on a first edge of a surface of the strip, the emitter not being in contact with the strip,
- a second electromagnetic acoustic transducer EMAT (3a) including an ultrasonic wave receiver, said waves being received by emerging from an area of the strip surface towards the receiver, the receiver not being in contact with the strip,
- a processing unit coupled to the second EMAT so as to provide at least one inspection criterion using at least one signature of the ultrasonic waves measured at the second EMAT,
- the area being located on the strip such that a wave path between the first edge of the strip and said area is aligned in a linear direction mainly transverse to the direction of movement of the strip,
**characterised by** a third electromagnetic acoustic transducer EMAT (3b) including a receiver of ultrasonic waves transmitted by the first EMAT (2) emerging from the surface of the first edge of the strip towards the receiver, the receiver not being in contact with the strip, the processing unit being coupled to the third EMAT so as to provide at least a second inspection criterion using at least two signatures of the ultrasonic waves, including at least the signature originating from a measurement made by the second EMAT and a signature originating from a measurement made by the third EMAT.

2. Inspection device according to claim 1, wherein, as far as possible away from the first strip edge, the area is located on a strip edge mainly transversally opposite the first edge of the strip.

3. Device according to claim 1 or 2, wherein the first and second EMATs (2, 3a) are separated by a distance equal to or greater than half the strip width.

4. Device according to one of the preceding claims, wherein the three EMATs are located at the vertices of a triangle, one of the sides of which is parallel to a transversal to the direction of movement of the strip.

5. Device according to one of the preceding claims, wherein at least one of the three EMATs is movable along a direction mainly transverse to the movement of the strip.

6. Device according to claim 5, wherein at least one of the three EMATs is movable along a direction mainly transverse to the movement of the strip, ideally in slaving mode in respect of a strip format and/or width.

7. Device according to one of the preceding claims, wherein a distance with no contact between each EMAT and the surface of the strip is maintained either constant or, otherwise, is provided by a means of instantaneous measurement.

8. Device according to one of the preceding claims 4-7, wherein the processing unit includes:
- a module (4) for monitoring the signal-to-noise ratios of the measurement signal collected at the second and third EMATs,
- a module (5) for detecting anomalies in the propagation of ultrasonic waves,
- a means (7a) for typological identification of areas presenting anomalies in propagation with respect to reference defects stored in a database (6),
- a means (7b) for geographical identification of areas presenting anomalies in propagation with respect to a longitudinal origin and a transverse origin of the moving strip,
- a means (8) for identifying the seriousness of defects identified in accordance with at least one criticality threshold taking account of at least one of the geographical and typological identification criteria.

9. Device according to one of claims 4-7, wherein:
- at least a fourth electromagnetic acoustic transducer EMAT including a wave emitter similar to that of the first EMAT is located in the vicinity of the area linked to the second EMAT (3a),
- the first and the fourth EMATs can be activated simultaneously under modes free from interference, said modes being measurable simultaneously by the second and the third EMATs.

10. Device according to claim 9, wherein the four EMATs are located at the vertices of a rectangle having a side parallel to a transversal to the direction of movement of the strip.

11. Use of the device according to one of the preceding claims to detect defects in cold or hot metal strips moving with respect to said device, said defects being either surface or internal and interacting with categories of ultrasonic waves transmitted or reflected as ultrasonic attenuators, diffusers or transformers, the defects being identifiable by at least two signatures originating from at least the second and the third electromagnetic acoustic transducers EMAT (3a, 3b) including a receiver of ultrasonic waves emitted by the first electromagnetic acoustic transducer EMAT (2) including an ultrasonic wave emitter.
